# EUROPÄISCHE PATENTSCHRIFT

(11) **EP 1 960 986 B1**
(45) Veröffentlichungstag und Bekanntmachung des Hinweises auf die Patenterteilung: **01.05.2013**
(21) Anmeldenummer: 06817736.9
(22) Anmeldetag: 07.12.2006
(51) Int. Cl.: G09B 21/02

(54) **VORRICHTUNG UND VERFAHREN ZUR HERSTELLUNG VON BRAILLE-SCHRIFT UND DREIDIMENSIONALEN STRUKTUREN**
DEVICE AND METHOD FOR PRODUCING BRAILLE SCRIPT AND THREE-DIMENSIONAL STRUCTURES
DISPOSITIF ET PROCEDE POUR REALISER DES INSCRIPTIONS EN BRAILLE ET DES STRUCTURES TRIDIMENSIONNELLES

(30) Priorität: 07.12.2005 CH 19312005
(43) Veröffentlichungstag der Anmeldung: 27.08.2008
(73) Patentinhaber: Berner Fachhochschule, 3401 Burgdorf (CH)
(72) Erfinder: VON ARX, Urs, CH-4950 Huttwil (CH); BIRCHER, Fritz, CH-4934 Madiswil (CH); KRAUSE, Reinhold, CH-8053 Zürich (CH); BERNET, Pascal, CH-4106 Therwil (CH); SCHÄR, Manfred, CH-3400 Burgdorf (CH)
(74) Vertreter: Rentsch Partner AG
(86) Internationale Anmeldenummer: PCT/CH2006/000684
(87) Internationale Veröffentlichungsnummer: WO 2007/065287

(56) Entgegenhaltungen:
- EP-A- 1 563 914
- EP-A1- 1 359 201
- DE-A1- 3 404 723
- DE-A1- 19 500 391
- FR-A1- 2 717 420
- US-A- 4 303 924
- US-A1- 2003 179 270

## Beschreibung

Die vorliegende Erfindung betrifft eine Vorrichtung und ein Verfahren zur Herstellung von Braille-Schrift und dreidimensionalen Strukturen, Druckzusammensetzung und die mit den Vorgenannten hergestellten Braille-Schriften und dreidimensionalen Strukturen zur Vermittlung von taktilen Informationen insbesondere für Blinde.

Bei der weit verbreiteten Braille-Schrift nach der Marburger Systematik ist jedes Zeichen mit einer Gruppe von sechs Punkten in zwei Spalten und drei Reihen codiert. Bei diesem System wird zwar zwischen Klein-, Mittel- und Grossdruck unterschieden, dabei wird jedoch nur der Abstand zwischen den einzelnen Punktreihen und -Spalten variiert, die Geometrie der Punkte bleibt unverändert. Wenn im Folgenden von Braille-, Punkt- oder Blindenschrift die Rede ist, dann sollen alle weiteren Typen oder Systeme von Blindenschriften, sowie alle beliebigen, punktbasierenden, dreidimensionalen Strukturen mit umfasst sein.

Seit einigen Jahren wird zum Beispiel für die Arbeit mit Computern eine Schrift aus 8 Punkten - Computerbraille - verwendet, die es erlaubt den weit verbreiteten ASCII-Zeichensatz mit 255 Zeichen zu codieren. Beim Lesen von Braille-Schrift, werden die Zeichen zeilenweise abgetastet.

Die am häufigsten verwendete Methode für die Herstellung von Blindenschriften, also taktilen Informationen, welche für stark Sehbehinderte und Blinde lesbar sind, ist das Prägen oder Punzieren von dünnen Materialien. Dabei drücken abgerundete Stifte das prägbare Material in ein Gegenlager und erzeugen so die für die Lesbarkeit nötige Höhe und Geometrie. Für Seriendruck wird Prägen jedoch auch mit entsprechend dem Text gefertigten Patrizen realisiert, deren Erhöhungen wie die abgerundeten Stifte das prägbare Material gegen die Vertiefungen der Matrize drücken.

Die FR2717420 beschreibt einen Braille-Drucker auf Basis eines Tintenstrahldruckverfahrens, bei welchem UV aushärtbare Tinte zum Einsatz kommt. Die eingesetzte Tinte besteht aus einem Bindemittel und enthält als weiteren Zusatz Pulver oder Lackbestandteile. Bevor die Tinte mit dem Papier in Kontakt kommt, wird diese aufgewärmt. Die gewünschte Verteilung erfolgt über Druckköpfe, welche als Düsen mit Ventilen ausgebildet sind. Die in der FR2717420 offenbarten Druckköpfe weisen keine Vorhärteeinheit auf. Die US2003/0179270 schlägt ebenfalls einen Braille-Drucker auf Basis eines Tintenstrahl- druckverfahrens vor, bei welchem UV aushärtbare Tinte zu Einsatz kommt. Der Drucker umfasst eine Einheit zur Generierung von UV-Strahlung, die eine separate Einheit bildet und mittels Lichtleiter mit dem Drucker verbunden ist Bei Druckvorgang wird das Aufbringen und das Aushärten der Tinte mehrfach wiederholt um einen ausreichend dicken Film auf der Papieroberfläche zu erzeugen. In der US2003/0179270 stellen UV-Quelle und Vorhärteinheit getrennte Einheiten dar.

Die wesentlichen Nachteile bei den bekannten Prägungen liegen bei den prägbaren Materialien per se, welche meistens in Form von teuren Spezialpapieren oder Spezialfolien vorliegen. Das Herstellen einer Seite Braille Text kostet im Bereich bis über einem Euro, je nach Komplexität des Textes. Da die üblicherweise verwendeten Spezialpapiere sehr dick und damit schwer sind, haben Bücher in herkömmlich geprägter Blindenschrift annähernd das 50fache Volumen von Schwarzschriftbüchern. Das Prägen von Serientexten auf kostengünstigere Materialien, wie dies bei Faltschachteln im Pharmabereich angewandt wird, hat eine beschränkte Höhe der Prägung zur Folge (bis ca. 0.1 mm), da sonst das Material reisst. Da in dieser Anwendung meist Matrizen und Patrizen verwendet werden, besteht zudem der nicht unerhebliche Aufwand für die Herstellung, Lagerung und Verwaltung der Patrizen.

Ein weiterer erheblicher Nachteil ist die durch das Prägeverfahren entstehende Lärmemission.

Ein grosses Problem aller geprägten Blindenschrift-Erzeugnisse ist ausserdem deren geringe Beständigkeit gegenüber mechanischer Belastung. So verlieren Braille-Dokumente bei mehrmaliger Verwendung oder durch Stapeln ihre Form und somit ihre Lesbarkeit.

Die Verwendung der Prägemethode ist zudem für die Beschriftung von Etiketten mit Blindenschrift und Reliefstrukturen nicht einsetzbar.

### Dosieren mit Dosierspritzen:

In EP1359201A1 ist gezeigt wie Blindenschrift mit hochviskoser, thixotroper, UV-härtbarer Tinte und mittels einer druckluftbetriebenen Dispensereinheit hergestellt werden kann. Nachteilig ist der langsame Druckprozess wegen der hochviskosen Tinte und der druckluftbetriebenen Dispensereinheit.

### Siebdruck:

In der DE-A-3404723 ist offenbart wie mittels Siebdruck und UV-härtbarer Tinte Blindenschrift erzeugt werden kann. Nachteilig am Siebdruck ist die umständliche technische Handhabung des Druckprozesses. Für jeden Druckauftrag muss ein neues Sieb hergestellt werden. Somit ist der Siebdruckprozess nur für die industrielle Anwendung mit hohen Druckauflagen geeignet. Zudem ist der Druckprozess für hohe Druckauflagen zu langsam.

### Tintenstrahldruck:

In DE-A-19500391 ist offenbart, wie Blindenschrift mittels digitaler Drucktechnologie und Wachstinte hergestellt werden kann. Nachteilig bei diesem Drop-On-Demand-Drucksystem ist der schichtweise Aufbau der Blindenschriftpunkte, was den Druckprozess langsam macht.

Für die Erzeugung von Braille-Schrift wurden bisher diverse Tinten-Systeme vorgeschlagen, welche Nachteile in Herstellung und Gebrauch mit sich bringen.

### Tinten auf Wasserbasis:

Bei Systemen auf Wasserbasis ist eine Trocknung notwendig, welche aufgrund der hohen Verdampfungsenthalpie des Wassers nicht genügend schnell realisierbar ist. Eine Beschleunigung der Trocknung ist mit einem zusätzlichen Energieaufwand verbunden. Im Weiteren zeigen wasserbasierende Tinten eine grosse Schrumpfung beim Trocknen.

### Lösungsmittelhaltige Tinten:

Bei lösungsmittelhaltigen Systemen wäre aufgrund der niedrigen Verdampfungsenthalpien von Lösungsmitteln eine schnellere Trocknung möglich, jedoch wird die Atmosphäre dabei mit flüchtigen organischen Verbindungen (VOC) belastet. Auch lösungsmittelhaltige Tinten zeigen beim Trocknen eine grosse Schrumpfung.

### Strukturtinten (Blähtinten, Schaumtinten):

Die Herstellung von expandierenden Tinten für die Herstellung von Transparenttinte für Braille und taktile Figuren wird im Patent EP-B-0667244 offenbart. Tinten dieser Art benötigen einen grösseren technischen Aufwand und die aufgebrachten Strukturen besitzen eine geringe Beständigkeit.

### Wachse:

Der Einsatz von Wachs als Tinte, wie er in der Patentanmeldung DE-A-19500391 beschrieben wird, ist möglich, da durch eine Erwärmung vor dem Drucken eine Verflüssigung erreicht wird. Nach dem Aufbringen auf das Substrat wird durch das Abkühlen eine Erhaltung der Form ermöglicht. Die Beständigkeit der aufgebrachten Strukturen und deren Haftung auf der bedruckten Oberfläche sind jedoch gering und verbesserungsbedürftig.

### Die obigen Ausführungen zeigen, dass es mit den bis heute verwendeten Drucktechniken und Druckzusammensetzungen nicht möglich ist sowohl Braille-Schrift als auch andere dreidimensionale und taktile Informationen mit der nötigen Qualität, Haltbarkeit, Geschwindigkeit und Zuverlässigkeit zu einem erschwinglichen Preis und ohne störende Emissionen herzustellen. Weder die gebräuchlichen Präge-Systeme noch die bisher vorgestellten Systeme mit Tinten erfüllen die vorangegangen Anforderungen und zeigen die Notwendigkeit eines neuen Systems.

### Strahlungshärtende Beschichtungen:

Durch elektromagnetische Strahlung im Bereich der ultravioletten Strahlung (UV-Strahlung, 100-380 nm) und der sichtbaren Strahlung (380-780 nm) lassen sich bestimmte Monomere und Oligomere bei Raumtemperatur (20°C) polymerisieren. Dazu können Sensibilisatoren, Initiatoren, Coinitiatoren und Beschleuniger notwendig sein. Als strahlungshärtbare Monomere und/oder Oligomere sind Acrylate, Epoxide, ungesättigte Polyester, Oxetane und Vinylether bekannt. Die Acrylate und ungesättigten Polyester polymerisieren dabei hauptsächlich mit einem radikalischen Reaktionsmechanismus. Die Epoxide, Oxetane und Vinylether hauptsächlich mit einem kationischen Reaktionsmechanismus. Die chemischen Grundlagen der Strahlungshärtung sind in der Literatur ausführlich beschrieben.

Verfahren zum Drucken von Braille-Schrift als auch von dreidimensionalen und taktilen Informationen mittels UV-härtbarer Tinte, die mittels Ink-Jet-Verfahren aufgebracht wird, wurde schon in diversen Anwendungen eingesetzt. Frühere Verwendungen von UV-härtbaren Zusammensetzungen sind unter anderem in US-A-4303924 und US-A-6164850 offenbart.

### UV-Härtung:

Bei der Verwendung einer Härtung von Monomeren und Oligomeren mittels UV-Strahlung im Bereich von Heimanwendern mit Home-Druckern ergeben sich wesentliche Nachteile. UV-Licht kann eine massive Schädigung der Augen und der Haut bewirken, ausserdem wird durch die UV-Strahlung Ozon erzeugt. Im Weiteren sind die Kosten für UV-Quellen und deren Energieverbrauch hoch. Die UV-Härtung ist daher nur für professionelle oder semiprofessionelle Anwender interessant.

### Blaulicht-Härtung:

Der Einsatz von Leuchtdioden (Light Emitting Diode, LED) bringt erhebliche Vorteile gegenüber der Härtung mittels UV-Licht. LEDs strahlen ein für Augen und Haut ungefährliches sichtbares Licht aus. Weiter sind sie einfach in der Anwendung und wesentlich günstiger als UV-Quellen. Sie bieten eine gute Energieeffizienz und besitzen eine lange Lebensdauer.

### Acrylat:

Der Einsatz von Acrylaten für die Verwendung mit Drucktechnologien wird zum Beispiel in der US-A-4303924 aus dem Jahre 1981 offenbart. Nachteil des Einsatzes von Acrylaten für die Härtung mit Licht ist, dass die Polymerisation durch Sauerstoff inhibiert wird, was zu einer schmierigen Oberfläche der gehärteten Strukturen führt. Dieser Effekt kann zum Beispiel durch den Einsatz eines Inertgases eliminiert werden, was aber vorrichtungsseitig und verfahrensseitig zu einem erheblichen zusätzlichen Aufwand führt.

Es ist daher die Aufgabe der vorliegenden Erfindung eine Vorrichtung und ein Verfahren zur Herstellung von Braille-Schrift und dreidimensionalen Strukturen zur Vermittlung von taktilen Informationen insbesondere für Blinde zur Verfügung zu stellen, welche die Nachteile der auf dem Markt befindlichen Produkte und Verfahren nicht aufweisen. Es ist eine weitere Aufgabe der vorliegenden Erfindung eine Druckzusammensetzung und Braille-Schriften und dreidimensionale Strukturen zur Vermittlung von taktilen Informationen insbesondere für Blinde zur Verfügung zu stellen, welche die Nachteile der auf dem Markt befindlichen Produkte nicht aufweisen. Es sollen insbesondere neue vorteilhafte Druckzusammensetzungen und Härtungsvarianten zur Verfügung gestellt werden.

Diese Aufgabe wird durch die neuen erfindungsgemässen Zusammensetzungen, Verfahren und Vorrichtungen für die Herstellung von Braille-Schrift und die damit hergestellten dreidimensionalen Strukturen gelöst.

Sie ermöglichen es Folgendes zu erreichen:
- an Stelle von teuren Spezialpapieren können praktisch alle üblichen Papiere und Folien, sowie eine grosse Anzahl weiterer Substrate wie Metall, Holz und die meisten Kunststoffe, bedruckt werden;
- Monomere und Oligomere sind 100 % vernetzend;
- Härtung ist sowohl mittels Blaulicht gemäss einer Ausführungsform möglich, wie auch mittels UV-Licht in einer anderen Ausführungsform;
- es kann ohne organische Lösungsmittel gearbeitet werden und es wird demzufolge bei der Verarbeitung und der Härtung kein VOC (Volatile Organic Compound) freigesetzt;
- die Qualität und Haltbarkeit der erzeugten Braille-Erzeugnisse sind wesentlich besser als bei den bekannten Erzeugnissen;
- die Lärmemission ist minimal; und
- es besteht eine deutlich höhere Flexibilität beim Einsatz gegenüber dem bisherigen Prägedruck und dem ebenfalls bekannten Siebdruck.

Die erfindungsgemässen Druckzusammensetzungen und Vorrichtungen erlauben es, verbunden mit den neuen Druckverfahren eine grosse Anzahl von Substraten mit Braille-Schrift sowie dreidimensionalen taktilen Informationen zu bedrucken und diese durch eine Blaulichthärtung zu fixieren. In weiteren Ausführungsformen der vorliegenden Erfindung werden Verfahren und Vorrichtungen zur Verfügung gestellt, die es erlauben mit UV-härtbaren Druckzusammensetzungen eine grosse Anzahl von Substraten mit Braille-Schrift und/oder dreidimensionalen taktilen Informationen zu bedrucken und mit UV zu fixieren.

Gemäss der vorliegenden Erfindung werden neue Druckzusammensetzungen und neue Druckverfahren zur Verfügung gestellt, die es ermöglichen, die gängigen Präge- und Siebdruckverfahren bei der Herstellung von Braille-Schrift zu ersetzen oder zu ergänzen. Im weiteren wird das Spektrum der Materialien, welche mit Braille-Schrift oder taktil erfassbaren Informationen bedruckt oder ausgerüstet werden können im Vergleich mit Prägedruckern drastisch vergrössert und es werden dadurch die Einsatzmöglichkeiten für Beschriftung mittels Braille erheblich erweitert.

Bevorzugte Ausführungsformen der erfindungsgemässen Vorrichtung und Verfahren werden nachstehend anhand der Zeichnungen beschrieben. Es zeigen:
- Fig. 1: ein Schema des Aufbaus einer Druckvorrichtung gemäss einer bevorzugten Ausführungsform;
- Fig. 2a: mehrere Zeichen und
- Fig. 2b: mehrere Symbole in Braille-Schrift;
- Fig. 3: einen Blindenschriftpunkt in perspektivischer Ansicht;
- Fig. 4: einen Längsschnitt durch eine Düse;
- Fig. 5a: eine Mehrzahl von Düsenanordnungen in einem Druckkopf, wobei die Düsenöffnungen jeweils durch Kreise symbolisiert sind;
- Fig. 5b: eine Druckzeile mit einer Mehrzahl von Düsen;
- Fig. 6: unidirektionale und bidirektionale Druckschemata;
- Fig. 7: eine Seitenansicht in Richtung des Papiervorschubs auf einen Druckkopf gemäss einer Ausführungsform der Erfindung umfassend zwei Vorhärtungseinheiten;
- Fig. 8: eine Seitenansicht quer zur Richtung des Papiervorschubs auf einen Druckkopf und eine Nachhärteeinheit; und
- Fig. 9: eine Seitenansicht einer LED Halterung mit Kühlkörper gemäss einer Ausführungsform der Erfindung.
- Fig. 10a: zeigt einen Druckkopf gemäss einer Ausführungsform der Erfindung im Längsschnitt und
- Fig. 10b: zeigt einen Druckkopf gemäss einer weiteren Ausführungsform der Erfindung im Längsschnitt.

### Beschreibung Druckprozess:

Das erfindungsgemässe Druckverfahren zum Drucken von Blindenschrift arbeitet mittels einer speziellen "Drop-On-Demand" Drucktechnologie und unterscheidet sich von der bekannten Tintenstrahl-Drucktechnologie ganz wesentlich durch das Volumen der erzeugten Tropfen sowie durch die Verwendung von gesteuerten Sitzventilen, vorzugsweise Elektromagnetventilen zur Erzeugung der Tropfen. Bevorzugt für das Druckverfahren werden Inlineventile der Firma Fluid Automation, oder besonders bevorzugt Mikroventile der Firma Fritz Gyger AG, CH-Thun.

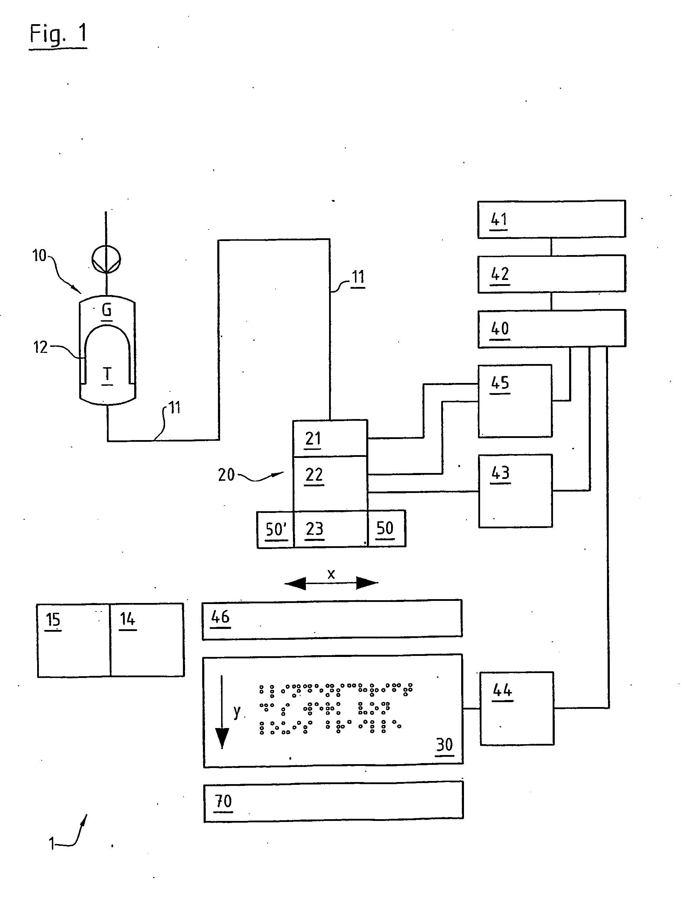

In dem in der Figur 1 dargestellten schematisierten Ausführungsbeispiel der erfindungsgemässen Druckvorrichtung 1 ist eine Patrone 10 über eine Zufuhrleitung 11 mit einem Druckkopf 20 verbunden. In der Patrone 10 befindet sich eine erfindungsgemässe strahlungshärtbare, zum Beispiel eine blaulichthärtbare Druckzusammensetzung T, die durch eine Gummimembrane 12 von einem treibenden Gas G mediumgetrennt gelagert ist. Als treibendes Gas wird entweder ein gasförmiges oder ein flüssiges Gas bezeichnet. Anstelle eines Treibgases G, das in einem Druckbehälter gespeichert oder über eine Pumpe 13 komprimiert wird kann der nötige Druck auch mittels eines Kolbens oder einer Zahnradpumpe erzeugt werden. Die Druckzusammensetzung T kann auch in einem Folienbeutel abgeschirmt von der Atmosphäre vorliegen. Die Mediumtrennung zwischen Druckzusammensetzung T und Treibgas G oder Atmosphäre verhindert die Diffusion der anliegenden Gase in die Druckzusammensetzung. Dies spielt eine entscheidenden Rolle, da eine mit Gas gesättigte Druckzusammensetzung im beheizten Druckkopf ausgasen und Blasen bilden würde, welche sich nachteilig auf den Druckprozess und auf das Druckergebnis auswirken würden.

Mittels eines Druckgases G oder wahlweise einer Pumpe wird die Druckzusammensetzung T mit Druck beaufschlagt und zum Druckkopf 20 befördert.

Zur Verhinderung der Gasdiffusion, insbesondere in der Patrone kann eine Membrane verwendet werden. Bevorzugt wird jedoch eine Druckdose mit einem mehrlagigen Folienbeutel , in welchem sich die Tinte befindet Der Beutel kann z.B. ein Laminat aus PET, Aluminium, OPA-Film und PP sein wie z.B. bei Folienbeuteln der Lindal Group. Ebenfalls bevorzugt wird eine LinRoc^{®}-Druckdose der Lindal Group, welche die Gasdiffusion mit einem Doppellippenkolben und einer hochviskosen Sperrflüssigkeit verhindert. Weiter wird bevorzugt eine Kartusche der Firma Mader AG, welche in einer eigens entwickelten, druckfesten Stützkartusche eingeschraubt ist. Die Gasdiffusion wird durch einen Lippenkolben verhindert.

Da bestimmte Bestandteile der Druckzusammensetzung Polyurethanschläuche angreifen, werden vorzugsweise beständigere Materialien für die mit der ungehärteten Druckzusammensetzug in Kontakt stehenden Oberflächen gewählt. Für die Leitung der Druckzusammensetzung vom Tank zum Druckkopf wird zum Beispiel ein flexibles Polyethylen- oder Fluoropolymer-Rohr (FEP140 oder Teflon^{®}) eingesetzt. Das Schlauchmaterial ist mit einem lichtdichten Aussenschlauch ummantelt oder bevorzugt schwarz eingefärbt, um eine Aushärtung der Druckzusammensetzung im Schlauch infolge Streulichts zu vermeiden.

Im Druckkopf 20 wird die Druckzusammensetzung mit einer Heizung 21 auf die benötigte konstante Temperatur geregelt aufgeheizt. Dies um die Viskosität,der Druckzusammensetzung herabzusetzen und um unabhängig von den Umgebungsbedingungen gleichbleibende Fliesseigenschaften der Druckzusammensetzung zu gewährleisten. Mit den im Folgenden beschriebenen Druckzusammensetzungen kann bei Raumtemperatur nicht gearbeitet werden, da sie zu zähflüssig wären um bei dem anliegenden Betriebsdruck als Tropfen 2 abgeschossen zu werden. Vorzugsweise wird daher die Druckzusammensetzung vor dem und/ oder im Ventil auf eine Temperatur von 30 bis 70°C erwärmt und auf dieser Temperatur gehalten. Eine Temperatur von etwa 40°C hat sich als besonders vorteilhaft erwiesen.

Als Betriebsdruck kommt vorteilhafter Weise ein Bereich von 1 bis 8 bar in Frage. Aus praktischen Gründen wird als Betriebsdruck 4 bar bevorzugt Bei einem höheren Betriebsdruck kann die Heiztemperatur gesenkt werden, solange die Grenzviskosität (50 bis 100 mPa*s) zur Tropfenbildung nicht überschritten wird. Entsprechend muss bei tieferen Heiztemperaturen der Betriebsdruck solange erhöht werden, bis die Grenzviskosität (50 bis 100 mPa*s) unterschritten wird. Die Variation von Heiztemperatur und Betriebsdruck muss so gehalten werden, dass die Grenzviskosität unterschritten wird, damit die Druckzusammensetzung genügend fliessfähig für die Verarbeitung ist. Um die Tropfengrösse anzupassen, wird die Ventilöffnungszeit eingestellt, welche zwischen 150 bis 1500 Mikrosekunden beträgt.

Mit der vorliegenden Erfindung sind grundsätzlich alle bekannten Braille-Schriften erzeugbar. Die nachfolgend beschriebenen Ausführungsformen basieren jedoch auf der Geometrie des Braille-Punktes nach Marburg-Medium-Standard und gehen von einer taktilen Auflösung beim Abtasten der Braille-Schrift durch den blinden oder sehbehinderten Leser von etwa ±0.1 mm aus. Braille-Punkte sowie beliebige, punktbasierende, dreidimensionale Strukturen können nach dem vorliegenden Verfahren mit einem Durchmesser von minimal 0.8 mm, maximal 2 mm und bevorzugt 1.6 mm erzeugt werden bei einer Höhe von minimal 0.05 mm und maximal 0.5 mm. Für Brailleschrift wird eine Höhe von 0.2 bis 0.3 mm bevorzugt

Dabei wird jeder Braille- oder Relief-Punkt jeweils aus einem einzigen Tropfen erzeugt. Die so erzeugten Tropfen besitzen je ein Volumen von minimal 0.005 mm³, maximal 0.5 mm³ und bevorzugt 0.1 bis 0.2 mm³.

Es ist ein wesentliches Merkmal der vorliegenden Erfindung, dass jeder der Blindenschrift- oder Relief-Punkte durch einen einzigen Tropfen der Druckzusammensetzung geformt wird. Die Erzeugung solcher dreidimensionaler Punkte aus einem einzigen Tropfen erfordert im Vergleich zu bekannten strahlungshärtbaren Druckzusammensetzungen sowohl eine hohe Viskosität wie auch eine hohe Oberflächenspannung der verwendeten Druckzusammensetzung, da der relativ grossvolumige Tropfen nach dem Auftreffen auf der zu bedruckenden Oberfläche nicht verlaufen darf.

Damit aus der entsprechenden Druckzusammensetzung die geforderten Braille- oder Relief-Punkte gedruckt werden können, ist eine Düsengeometrie mit einem Durchmesser d eines Düsenkanals von minimal 0.1 mm, maximal 0.5 mm und bevorzugt 0.30 bis 0.45 mm erforderlich. Dabei soll die Länge I des Düsenkanals gleichzeitig minimal 1 x d, maximal 10 x d, bevorzugt 2 bis 3 x d betragen.

Die Düsen sind vorzugsweise aus Zirkoniumoxid gefertigt und mit einem fluorhaltigen Silan, vorzugsweise mit 1H,1H,2H,2H-Perfluorodecyltrichlorsilan silanisiert. Dadurch wird die Oberflächenenergie des Zirkoniumoxids minimiert und die Haftung von Rückständen der Druckzusammensetzung auf der Stirnseite der Düse verhindert. Als alternative Materialien für die Düse werden vorzugsweise Saphir oder Rubin verwendet, wie sie aus Düsen von Mikroventilen der Firma Fritz Gyger AG, CH-Thun bekannt sind.

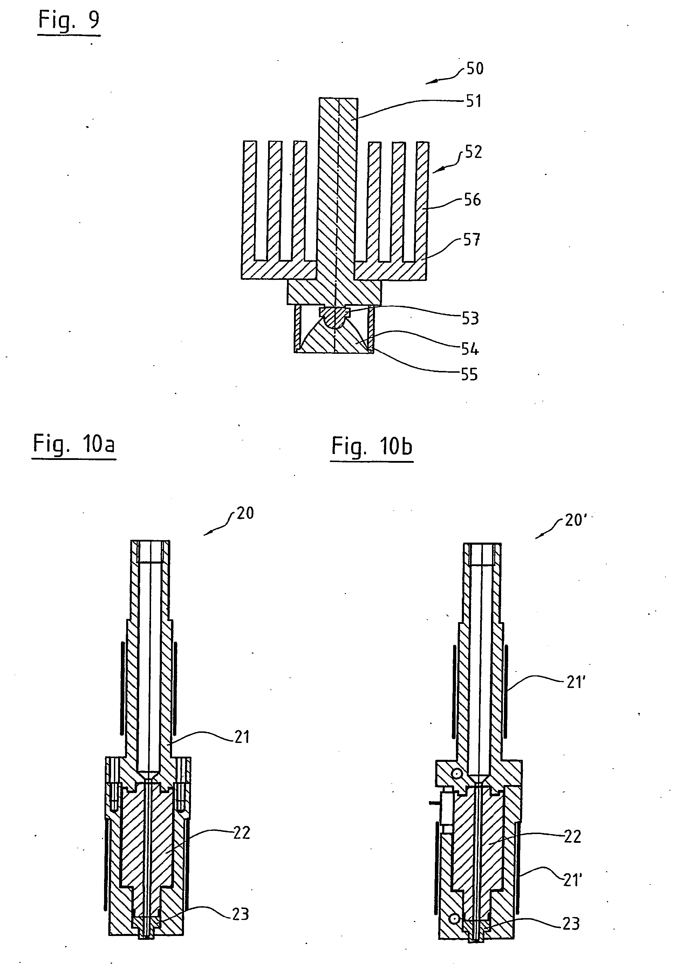

Im Ausführungsbeispiel der Figur 1 fliesst die mittels einer nicht in der Figur dargestellten Pumpe 13 druckbeaufschlagte Druckzusammensetzung durch einen Erhitzer 21 vorgewärmt in ein Elektromagnetventil 22, welches durch zeitlich definierte Öffnungsimpulse die benötigten Mengen Druckzusammensetzung für die Blindenschriftpunkte dosiert und einer Düse 23 zuführt Die Düse 23 formt einen Tropfen und sorgt für die präzise Positionierung dieses Tropfens auf dem zu bedruckenden Objekt 30. In der Figur 10a sind die wesentlichen Elemente eines solchen Druckkopfes 20 im Längsschnitt skizziert.

In einer weiteren bevorzugten Ausführungsform eines erfindungsgemässen Druckkopfes 20' wird, wie in der Figur 10b gezeigt, auf den vorgeschalteten Erhitzer 21 verzichtet und ein Elektromagnetventil 22 direkt, zum Beispiel mittels einer Heizfolie 21', erwärmt. Das Volumen des beheizbaren Ventils ist vorzugsweise so gewählt, dass in einem Innenraum wiederum ein ausreichendes Volumen an Druckzusammensetzung auf ein druckbares Mass erwärmt werden kann und ein kontinuierliches Drucken gewährleistet ist.

Eine Druckersteuerung 40 berechnet die Lage der Blindenschriftpunkte, welche in einer bevorzugten Ausführungsform wie bei einem herkömmlichen Matrixdrucker zeilenweise ausgegeben werden. Im einfachsten Fall werden dabei von der Steuerung 40 der Druckkopfvorund Rücklauf 43 der Papiervorschub 44 und das Ventil 22 gesteuert. In einer weiteren Ausführungsform bevorzugt für industrielle Anwendungen wird die Ausgabe der Blindenschriftpunkte aus einem feststehenden, nicht beweglichen Druckkopf gesteuert.

In weiteren bevorzugten Ausführungsformen der Erfindung umfasst die Druckvorrichtung Druckköpfe mit mehr als einer Ventil-/Düsenkombination, respektive und/oder mehr als einen Druckkopf, die jeweils mittels einer gemeinsamen oder mehreren getrennten Tintenversorgungen mit Druckzusammensetzung versorgt werden.

Die Ansteuerung der Elektromagnetventile 22 erfolgt vorzugsweise über eine spezielle elektronische Schaltung, welche die notwendigen schnellen Spannungs- und Stromimpulse an einer Spule des Ventils 22 generiert. Die Regelung der Heizung 21, 21' wird von einem Heizregler 45 bewerkstelligt.

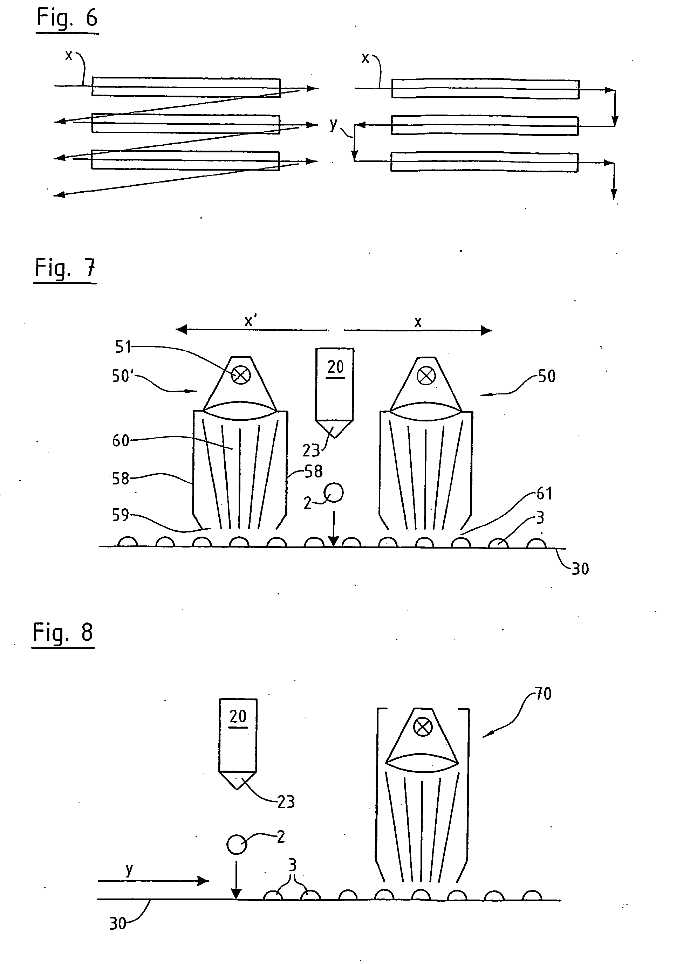

In der Figur 6 ist dargestellt, dass mit der erfindungsgemässen Druckvorrichtung in einer Ausführungsform in bekannter Weise unidirektional oder bidirektional gedruckt werden kann. Die Umsetzung der zu druckenden Bild- oder Textinformation, die beispielsweise von einem Personalcomputer 41 stammt, über ein Interface 42 in einen geeigneten Datenstrom ist dem Fachmann bekannt und muss hier nicht näher erläutert werden. In der Figur 1 ist zwischen Druckkopf 20 und der zu bedruckenden Oberfläche 30 ein Papiereinzug angedeutet.

Aus der schematischen Darstellung der Figur 7 geht hervor, dass für den bidirektionalen Druck vorzugsweise ein Druckkopf 20 mit zwei Vorhärteinheiten 50, 50' ausgerüstet ist. In Druckrichtung vor und hinter dem Druckkopf 20 sind in einer bevorzugten Ausführungsform zwei Blaulichtquellen umfassende Vorhärteeinheiten 50 montiert, von denen jeweils die in Druckrichtung nach dem Druckkopf liegende Lichtquelle unmittelbar nach dem Drucken die Blindenschriftpunkte bestrahlt und den Aushärtungsprozess der Druckzusammensetzung startet. Beim unidirektionalen Drucken genügt es, dass eine einzelne Vorhärteeinheit in Druckrichtung nach der Düse am Druckkopf angeordnet und/oder betrieben ist. Allgemein gilt, dass mindestes eine Vorhärteeinheit zumindest funktional in Druckrichtung nach der Düse am Druckkopf angeordnet und/oder betrieben ist. Das heisst, dass die Vorhärteeinheit durchaus auch in Druckrichtung vor oder neben der Düse am Druckkopf angeordnet sein kann, sofern sichergestellt ist, dass der erzeugte Lichtstrahl die frisch erzeugten Punkte auf der zu bedruckenden Oberfläche in Druckrichtung nach der Düse beleuchten. Dies kann zum Beispiel durch eine geeignete Auswahl und Ausrichtung der Linsen an der Vorhärteeinheit geschehen.

Im Fall der in der Figur 7 gezeigten bevorzugten Ausführungsform mit zwei Vorhärteeinheiten 50, 50' genügt es im unidirektionalen Betrieb die in Druckrichtung nach dem Druckkopf angeordnete Blaulichtquelle zu betreiben. Auch beim bidirektionalen Betrieb kann zur Energieersparnis jeweils die in Druckrichtung x vor dem Druckkopf liegende Lichtquelle während des Druckens einer Zeile ausgeschaltet werden. In weiteren bevorzugten Ausführungsformen ist nur eine Vorhärteeinheit angebracht. Bei entsprechend hoher Viskosität der Druckzusammensetzung kann in einer weiteren Ausführungsform auch ganz auf die Vorhärteeinheit verzichtet werden.

Als Blaulichtquelle werden vorzugsweise Hochleistungs- oder Power-LED eingesetzt, die Licht mit einer Wellenlänge von etwa 470 nm abstrahlen. Wie bereits erwähnt, kann in der Ausführungsform gemäss der Figur 7 bidirektional gedruckt werden, da die Vorhärteeinheiten mit den zugeordneten Strahlungsquellen 50, 50' auf beiden Seiten des Druckkopfes 20 angebracht sind.

Mittels Kollimatorlinsen wird das Licht aus den Blaulichtquellen fokussiert und die Strahlungsdichte erhöht. Somit kann die Druckgeschwindigkeit gesteigert werden und der Wirkungsgrad des Härtungssystems wird verbessert.

Obwohl die Hochleistungs-LED sehr energieeffizient sind, erwärmen sie sich beim Betrieb so stark, dass es sich als vorteilhaft erwiesen hat eine passive Kühlung vorzusehen. In einer bevorzugten Ausführungsform, die in der Figur 9 dargestellt ist, ist an eine Fassung 51 die an einem unteren Ende eine Hochleistungs-LED 53 der Firma Lumimed vom Typ LXHL-PBO2 (blue) oder Typ LXHL-PRO2 (royalblue) trägt ein Kühlkörper 52 angeordnet Der Kühlkörper ist mit einer Basalplatte 57, auf der vertikal nach oben gerichtete Kühlrippen 56 stehen an das untere Ende der Fassung 51 geklebt. Unterhalb der LED 53 sind Linsenhalter 55 und Kollimatorlinse 54 angebracht, die ebenso wie der Kühlkörper vorzugsweise mit einem Wärmeleitkleber verklebt sind.

In einer weiteren Ausführungsform der Erfindung sind die Hochleistungs-LED nicht direkt am Druckkopf angebracht, sondern das Licht der stationären LEDs wird über flexible Lichtleiter in die Vorhärteeinheiten geleitet

In den bevorzugten Ausführungsformen wird das gebündelte Licht aus den Blaulichtquellen der Vorhärteeinheit 50 zumindest gegen die Düse 23 hin abgeschattet, um sicherzustellen, dass die Druckzusammensetzung erst nach dem Auftreffen auf die zu bedruckende Oberfläche 30 belichtet und damit gehärtet wird. Wie in der Figur 7 skizziert, umschliessen Abschattungen 58 die Lichtquellen vorzugsweise derart, dass nur an einer der zu bedruckenden Oberfläche 30 zugewandten Seite eine Austrittsöffnung 59 für den gebündelten Lichtstrahl 60 offen bleibt. Der Spalt 61 zwischen den Unterkanten der Abschattungen 58 und der zu bedruckenden Oberfläche 30 ist vorzugsweise nicht grösser als 1 bis 4 mm, bevorzugt nicht grösser als 1.5 mm. Dadurch wird vermieden, dass Blaulicht die Düse 23 erreicht (direkt oder als Streulicht durch Reflektion an der zu bedruckenden Oberfläche 30) und die Druckzusammensetzung vorzeitig belichtet wird und dadurch die Düse verstopft.

Wenn in vorangehenden und folgenden Beschreibungsteilen zur erfindungsgemässen Vorrichtung jeweils von Blaulicht und Blaulichtquellen gesprochen wird, so soll dies nicht einschränkend sein. Die technische Lehre gilt auch für das Drucken mit UV-härtenden Druckzusammensetzungen, bei dem entsprechende UV-Lichtquellen an Stelle der Blaulichtquellen eingesetzt werden.

Durch die Wahl der Bezeichnung Vorhärteeinheit wird schon zum Ausdruck gebracht, dass im erfindungsgemässen Blindenschriftdrucker vorzugsweise noch eine Nachhärtungseinheit vorgesehen ist. Die grossvolumigen Tropfen 2 der Druckzusammensetzung T müssen unmittelbar nach dem Aufbringen auf die zu bedruckende Oberfläche 30 gehärtet werden, um ein Verlaufen zu vermeiden und um die erzeugten dreidimensionalen Strukturen zu stabilisieren. Dies führt zwangsläufig zu einem Konflikt zwischen Beleuchtungsenergie und der Druckgeschwindigkeit. In der vorliegenden Erfindung wurde dieser Konflikt durch die Bereitstellung einer nachgeschalteten Nachhärtungseinheit 70 gelöst.

In der Nachhärtungseinheit 70 werden die vorgehärteten Blindenschriftpunkte 3 endgültig fixiert, indem sie für vorzugsweise 2 Sekunden mit Blaulicht hoher Intensität bestrahlt werden. Wie in der Figur 8 dargestellt, ist die Nachhärtungseinheit 70 in Vorschubrichtung y stromabwärts vom Druckkopf 20 angeordnet und als Blaulichtleiste aus vorzugsweise einer Mehrzahl von Hochleistungs-LED aufgebaut. Die Nachhärtungseinheit 70 erstreckt sich vertikal zur Vorschubrichtung y über die gesamte Seitenbreite, respektive über die gesamte Breite eines bedruckbaren Bereiches der zu bedruckenden Oberfläche 30. Die Vorschubgeschwindigkeit der zu bedruckenden Fläche 30 in Richtung y ist wesentlich geringer als die Relativgeschwindigkeit des Druckkopfes in Zeilen-Richtung x. Bei der Standardanwendung zum Drucken von Blindenschriftzeichen in Zeilenform ist die Nachhärtungseinheit 70 vorzugsweise in einem ganzzahligen Vielfachen der Zeilenhöhe plus Zeilenabstand von dem eigentlichen Druckbereich entfernt, so dass eine fertig gedruckte Zeile (n) während der Zeit in der eine nachfolgende Zeile (zum Beispiel n+3) gedruckt wird im Beleuchtungsbereich der Nachhärtungseinheit 70 vorschubfrei verweilen kann.

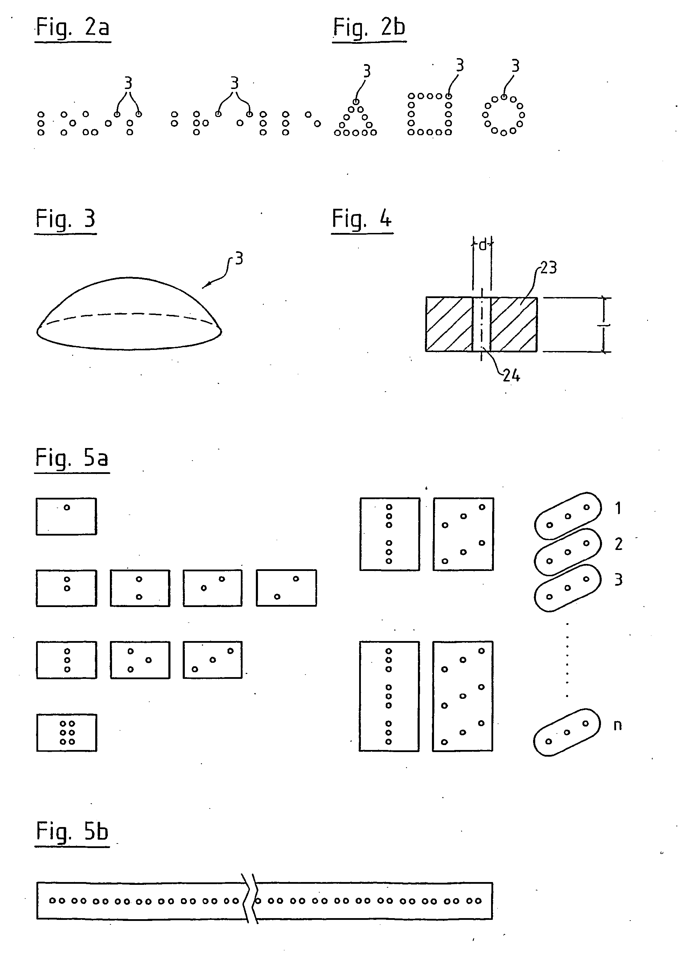

In der Figur 5a ist eine Mehrzahl von verschiedenen vorteilhaften Düsentypen schematisch dargestellt, wobei die Austrittsöffnungen jeder Düse als standardisierter Kreis und der Düsengrundkörper als Quadrat und/oder Rechteck eingezeichnet sind. Die Düsen werden vorteilhafter Weise so in einer Reihe angeordnet, dass mehrere Punkte pro Zeilenvorschub gedruckt werden können.

In einer weiteren, der Figur 5b dargestellten Ausführungsform ist eine Druckzeile gebaut, welche so viele Düsen hat, wie Punkte pro Zeile adressiert werden könnten. Für den Fall, dass die Ventile grösser sind als der Punktabstand, werden die Düsen versetzt angeordnet.

Bevorzugt wird eine Düsenanordnung gemäss Fig. 5a mit drei Düsen entweder in einer vertikalen Reihe oder in einer Reihe.schräg in Druckrichtung versetzt, um eine Standard-Blindenschriftzeile mit kompletten Zeichen in einem Durchgang zu drucken. Eine solche Anordnungen wird als Zeilenmodul bezeichnet.

Neben den Ausführungsformen mit beweglichem Druckkopf werden auch Ausführungsformen mit feststehendem Druckkopf eingesetzt Diese kommen vorzugsweise in industriellen Anwendungen zum Zuge, wo das zu bedruckende Substrat am Druckkopf vorbei bewegt wird. Solche Druckeinheiten werden bevorzugt aus mehreren Zeilenmodulen mit je drei Düsen aufgebaut, wie sie für Braille-Schrift vorangehend bereits beschrieben sind. Auf diese Weise sind Druckeinrichtungen mit bis zu 30 Zeilenmodulen denkbar.

Weitere Ausführungsformen beinhalten spezielle Anordnungen der Düsen gemäss Fig. 5a und 2b, welche den Druck von dreidimensionalen taktilen Grafiksymbolen erlauben. Diese kommen vorzugsweise ebenfalls im industriellen Bereich zur Anwendung.

Wie von gebräuchlichen Desktop-Tintenstrahldruckern bekannt und in der Figur 1 dargestellt, befindet sich eine Parkstation 15 seitlich vom Druckbereich. Es ist ein wesentliches Merkmal der erfindungsgemässen Druckvorrichtung, dass die Parkstation eine lichtdichte Abdeckung umfasst, welche die Düse 23 oder die Düsen bei Nichtgebrauch abdecken. Dadurch wird ein unerwünschtes Aushärten von Druckzusammensetzung infolge Umgebungsstreulicht vermieden.

Vor dem Parkieren in der Parkstation 15 und bei Bedarf während des Druckens wird die Düse an einer Reinigungsstation 14 mittels einer scharfkantigen Gummilippe von überschüssiger Druckzusammensetzung gereinigt. Die Reinigungsstation 14 ist vorzugsweise in axialer Verlängerung zwischen dem eigentlichen Druckbereich und der Parkstation angeordnet.

Für die Ausführungsformen mit feststehendem Druckkopf, welche zur Hauptsache in industriellen Anwendungen eingesetzt werden, sind die Reinigungskomponenten beweglich ausgeführt. An Stelle der Parkstation wird der Druckkopf bei Nichtgebrauch lichtdicht abgedeckt

Zur Verbesserung des Reinigungsverhaltens können bei allen Ausführungsformen silanisierte Düsen verwendet werden, wie sie vorangehend beschrieben sind. Mit der Benutzung von derart beschichteten Düsen kann auf eine Reinigungseinheit verzichtet werden.

### Beschreibung Druckzusammensetzung:

Die in der erfindungsgemässen Druckvorrichtung, auch Drucker genannt, verwendbaren Druckzusammensetzungen sind vorzugsweise blaulichthärtbare Zusammensetzungen, die zu annähernd 100% vernetzende Mono- und/oder Oligomere umfassen. Wie bereits oben beschrieben werden relativ grossvolumige Tröpfchen auf die zu bedruckenden Oberflächen appliziert, so dass zum Beispiel ein einzelner Blindenschriftpunkt von einem einzigen Tröpfchen gebildet wird ("single-shot"-Prinzip). Die bedruckbaren Oberflächen umfassen Papiere, Karton, insbesondere auch beschichtete Papiere und Kartonagen, wie sie für Verpackungen eingesetzt werden. Als Ferner sind Folien, Klebefolien, Etiketten und jegliche Art von bedruckbaren Kunststoffen umfasst Um zu gewährleisten, dass die einzelnen Tröpfchen beim und nach dem Auftreffen auf die zu bedruckende Oberfläche nicht verlaufen, respektive um sicherzustellen; dass die Höhe jedes einzelnen Blindenschriftpunktes ausreichend ist, werden an die erfindungsgemässen Druckzusammensetzungen ganz spezielle Anforderungen gestellt.

Die Viskosität der Druckzusammensetzungen, die zum "single-shot"-Drucken geeignet sind, liegt optimal bei ca. 50 bis 100mPa*s. Dieser Wert wird, wie oben erwähnt, vorzugsweise über die Erhöhung der Temperatur erreicht. Bei den folgenden Beispielen 1 und 2 ist dies bei einer Temperatur von ca. 45°C erreicht. Beim Beispiel 3 ist eine Temperatur von ca. 60°C nötig. Bei Raumtemperatur besitzt die Tinte aus Beispiel 1 eine Viskosität von ca. 200 mPa*s, die Tinte von Beispiel 2 ca. 600 mPa*s und die von Beispiel 3 1500 mPa*s.

Der Feststoffgehalt der erfindungsgemässen Zusammensetzungen liegt vorzugsweise bei bis zu 10 % (w/w) Aerosil R 7200. Als bevorzugt hat sich eine Oberflächenspannung der Druckzusammensetzungen von etwa 30 bis 60 mN/m (25°C), vorzugsweise 40 mN/m (25°C) erwiesen.

In einer ersten Ausführungsform basiert die Druckzusammensetzung auf Mono-, Di- oder Triacrylaten. Diese Acrylate härten normalerweise durch einen radikalischen Polymerisationsprozess aus. Bei Acrylaten muss vorzugsweise unter Schutzgasatmosphäre (zum Beispiel Stickstoff, Argon oder CO₂) gearbeitet werden, da sonst durch die Inhibierung des Polymerisationsprozesses durch Sauerstoff eine schmierige Oberfläche entsteht.

In einer zweiten bevorzugten Ausführungsform basieren die Druckzusammensetzungen auf Epoxiden, Oxetanen oder Vinylether, welche kationisch polymerisieren.

Es sind auch Kombinationen der vorgängig genannten Zusammensetzungen möglich.

Damit die Polymerisation mit UV-Strahlung und/oder sichtbarer Strahlung initiiert werden kann, ist im Fall der radikalisch härtenden Monomere und/oder Oligomere mindestens ein Initiator, der gleichzeitig als Sensibilisator wirkt, notwendig. Dieser muss ein Absorptionsmaximum im Bereich der eingesetzten Strahlung aufweisen. Im Falle der bevorzugten sichtbaren Strahlung im. Bereich von 470 nm (Blaulicht) ist dies ein Keton, vorzugsweise ein α-Diketon wie Campherchinon, Phenylpropandion oder 2,3-Butandion. Die Polymerisationsgeschwindigkeit kann durch Zugabe eines Beschleunigers erhöht werden. Als Beschleuniger werden vorzugsweise tertiäre Amine oder Ether mit mindestens einem Substituenten mit α-ständigen H-Atom und einem Acrylsubstituenten eingesetzt wie im speziellen 4-Dimethylaminobenzoesäureethylester oder 1,2,4-Trimethoxybenzol.

Im Fall der kationisch polymerisierenden Monomere und/oder Oligomere ist neben dem Initiator zusätzlich ein Sensibilisator notwendig, falls das Emissionsspektrum der zur Härtung verwendeten Lichtquelle nicht im Absorptionsspektrum des Initiators liegt. Der Initiator ist bei Anwendung der bevorzugten sichtbaren Strahlung im Bereich von 470 nm (Blaulicht) ein unsubstituiertes oder substituiertes Diphenyliodoniumsalz mit einem schwach koordinierenden Anion wie Bortetrafluorid, Phosphorhexafluorid oder Antimonhexafluorid. Als Stabilisator wird im Bereich von 470 nm (Blaulicht) vorzugsweise ein α-Diketon wie Campherchinon, Phenylpropandion oder 2,3-Butandion verwendet. Auch die Reaktionsgeschwindigkeit der kationisch polymerisierenden Systeme kann mit den oben genannten Beschleunigern erhöht werden.

### Beispiel 1: Blaulicht härtbare Druckzusammensetzung enthaltend ein Epoxid-Monomer und ein Oxetan-Monomer

| Komponente | Gew.-% |
|---|---|
| Araldit^{®} CY 179 | 65.52 |
| Oxetan TMPO | 11.85 |
| IRGACURE^{®} 250 | 16.78 |
| (+/-)-Campherchinon | 3.95 |
| Ethyl-4-(Dimethylamino)Benzoat | 0.64 |
| Sandoplast^{®} Blue 2B | 0.08 |
| AEROSIL^{®} R7200 | 1.18 |

| | |
|---|---|
| Araldit^{®} CY 179 ist ein Epoxidharz und wird von der Firma Huntsman angeboten. | |

Oxetan TMPO (Trimethylolpropan Oxetan, 3-Ethyl-3-oxetanmethanol) ist ein Oxetanharz und wird von der Firma Perstorp Specialty Chemicals AB angeboten. In einer weiteren Ausführungsform ist Oxetan TMPO durch CYRACURE^{®} UVR-6000, ein Oxetanharz der Firma Dow Chemical, ersetzt.

IRGACURE^{®} 250 bezeichnet einen kationischen Photoinitiator, bestehend aus einem Iodoniumsalz, (4-methylphenyl)[4-(2-methylpropyl)phenyl]-Iodonium-hexafluorophosphat, der von der Firma Ciba Spezialitätenchemie angeboten wird.

Sandoplast^{®} Blue 2B ist ein Anthrachinon-Farbstoff, der von der Firma Clariant hergestellt wird.

AEROSIL^{®} R 7200 ist eine strukturmodifizierte mit Methacrylsilan nachbehandelte pyrogene Kieselsäure und wird von der Firma Degussa angeboten.

Die einzelnen Komponenten können innerhalb der folgenden Bereiche variiert werden:

| Komponente | Gew.-% | |
|---|---|---|
| | Min. | Max. |
| Araldit^{®} CY 179 | 60 | 95.3 |
| Oxetan TMPO | 0 | 35 |
| IRGACURE^{®} 250 | 4 | 20 |
| (+/-)-Campherchinon | 0.7 | 6 |
| Etyhl-4-(Dimethylamino)Benzoat | 0 | 1.5 |
| Sandoplast^{®} Blue 2B | 0 | 0.5 |
| AEROSIL^{®} R7200 | 0 | 10 |

### Beispiel 2: Blaulicht härtbare Druckzusammensetzung enthaltend ein Oxetan-Monomer

| Komponente | Gew.-% |
|---|---|
| OXT-121 | 81.36 |
| Oxetan TMPO | 8.53 |
| IRGACURE^{®} 250 | 5.77 |
| (+/-)-Campherchinon | 1.07 |
| Ethyl-4-(Dimethylamino)Benzoat | 0.48 |
| Sandoplast^{®} Blue 2B | 0.09 |
| AEROSIL^{®} R7200 | 2.70 |

OXT-121 ist ein Oxetanharz und wird von der Firma Toagosei angeboten.

Die einzelnen Komponenten der Druckzusammensetzung gemäss Beispiel 2 können wie folgt variiert werden:

| Komponente | Gew.-% | |
|---|---|---|
| | Min. | Max. |
| OXT-121 | 75 | 95.3 |
| Oxetan TMPO | 0 | 35 |
| IRGACURE^{®} 250 | 4 | 20 |
| (+/-)-Campherchinon | 0.7 | 6 |
| Etyhl-4-(Dimethylamino)Benzoat | 0 | 1.5 |
| Sandoplast^{®} Blue 2B | 0 | 0.5 |
| AEROSIL^{®} R7200 | 0 | 10 |

### Beispiel 3: Blaulicht härtbare Druckzusammensetzung enthaltend ein Acrylat-Monomer

| Komponente | Gew.-% |
|---|---|
| EBECRYL^{®} 150 | 96.62 |
| (+/-)-Campherchinon | 1.16 |
| Ethyl-4-(Dimethylamino)Benzoat | 1.16 |
| Sandoplast^{®} Blue 2B | 0.1 |
| AEROSIL^{®} R7200 | 0.97 |

EBECRYL^{®} 150 ist ein Bisphenol-A-derivat-diacrylat und wird von der Firma UCB Chemicals angeboten.

Die Anteile der einzelnen Komponenten lassen sich wiederum wie folgt variieren:

| Komponente | Gew.-% | |
|---|---|---|
| | Min. | Max. |
| EBECRYL^{®} 150 | 94 | 99.5 |
| (+/-)-Campherchinon | 0.5 | 3 |
| Etyhl-4-(Dimethylamino)Benzoat | 0 | 3 |
| Sandoplast^{®} Blue 2B | 0 | 0.5 |
| AEROSIL^{®} R7200 | 0 | 10 |

In der folgenden Tabelle sind zu den obigen bevorzugten Ausführungsbeispielen die Komponenten angegeben, die für die Funktion zwingend nötig sind. In der rechten Spalte sind die fakultativen Komponenten zusammengestellt, die die Funktionalität entscheidend verbessern.

| Beispiel | Nötig | Fakultativ |
|---|---|---|
| 1 | Araldit Cy 179 | Oxetan TMPO |
| | IRGACURE 250(+/-)-Campherchinon | Sandoplast^{®} Blue 2B |
| | | AEROSIL^{®} R7200 |
| | | Ethyl-4-(Dimethylamino)Benzoat |
| 2 | OXT-121 | Sandoplast^{®} Blue 2B |
| | IRGACURE^{®} 250 | UVR-6000 |
| | (+/-)-Campherchinon | AEROSIL^{®} R7200 |
| | | Ethyl-4-(Dimethylamino)Bentoat |
| 3 | EBECRYL^{®} 150 | Sandoplast^{®} Blue 2B |
| | (+/-)-Campherchinon | AEROSIL^{®} R7200 |
| | | Ethyl-4-(Dimethylamino)Benzoat |

Ein Überblick zur Funktion der einzelnen Komponenten aus den obigen Beispielen ist in der folgenden Tabelle gegeben.

| Komponente | Zweck |
|---|---|
| Araldit^{®} CY 179 | Monomere und/oder Oligomere |
| OXT-121 | |
| EBECRYL^{®} 150 | |
| Oxetan TMPO | Reaktiwerdünner |
| IRGACURE^{®} 250 | Photoinitiator |
| (+/-)-Campherchinon | Sensibilisator |
| Ethyl-4-(Dimethylamino)Benzoat | Beschleuniger |
| Sandoplast^{®} Blue 2B | Farbstoff |
| AEROSIL^{®} R7200 | Verbesserung des Einsinkverhaltens auf Papier |

In den obigen Beispielen sind Komponenten genannt, die sich in ausführlichen Tests als vorteilhaft erwiesen haben. Die in den Beispielen angegebenen Komponenten lassen sich durch gleich- oder ähnlich wirkende Stoffe ersetzen. In der folgenden Tabelle sind einige Alternativen oder Ersatzstoffe aufgelistet

| Komponente | Alternative |
|---|---|
| Araldit^{®} CY 179 | CYRACURE^{®} UVR-6110 |
| EBECRYL^{®} 150 | Bisphenol A ethoxylate dicacrylate |
| Oxetan TMPO | OXT-101 |
| Sandoplast^{®} Blue 2B | Polysynthren^{®} Blue RLS |

CYRACURE^{®} UVR-6110 ist ein Epoxidharz und wird von der Firma Dow Chemical angeboten. OXT-101 ist ein Oxetanharz und wird von der Firma Toagosei angeboten. Polysynthren^{®} Blue RLS ist ein Anthrachinon-Farbstoff, der von der Firma Clariant hergestellt wird.

| Komponente | Stoffklasse |
|---|---|
| Araldit^{®} CY 179 | Epoxid |
| OXT-121 | Oxetan |
| EBECRYL^{®} 150 | Acrylat |
| Oxetan TMPO | Oxetan |
| IRGACURE^{®} 250 | Substituiertes Diphenyliodionium-Salz |
| (+/-)-Campherchinon | alpha-Diketon mit charakteristischer Absorption |
| Ethyl-4-(Dimethylamino)Benzoat | tert. Amin mit H in α-Stellung |
| Sandoplast^{®} Blue 2B | polymerlöslicher Farbstoff |
| AEROSIL^{®} R7200 | strukturmodifizierte pyrogene Kieselsäure |

Die erfindungsgemässen Druckzusammensetzungen werden vorteilhafter Weise nach der Herstellung entgast (Vakuum und/oder Ultraschall) und die Abfüllung sollte luftfrei erfolgen.

Während in den vorgängig beschriebenen bevorzugten Ausführungsbeispielen nur von blaulichthärtbaren Druckzusammensetzungen die Rede war, soll nun noch auf die Verwendung von UV-härtbaren Druckzusammensetzungen im erfindungsgemässen "single-shot" Verfahren eingegangen werden.

Trotz der Vorteile der Blaulichthärtung, vor allem bei der Anwendung im Privatbereich, kann im gewerblichen Einsatz, zum Beispiel bei der Braille-Beschriftung von Medikamentenpackungen, die UV-Härtung oder eine Kombination von UV- und Blaulichthärtung vorteilhaft zum Einsatz kommen. Während für eine Kombination von UV- und Blaulicht die blaulichthärtenden Tinten verwendet werden, ist es möglich für die ausschliessliche Härtung mit UV-Licht andere Druckzusammensetzungen einzusetzen. Grundsätzlich können drei unterschiedliche Arten von UV-Quellen zur Anwendung kommen. Eine erste Möglichkeit ist der Einsatz von UV-Flächenstrahlern, mit denen eine grössere Fläche gleichzeitig gehärtet werden kann. Bei diesen Geräten wird die Strahlerleistung gemäss Angaben des Herstellers im Allgemeinen in W/cm angegeben und betragt bei den bevorzugten Geräten zwischen 30 W/cm und 240 W/cm. Eine weitere Möglichkeit ist der Einsatz eines UV-Punktstrahlers mit einem Lichtleiter, mit dem eine punktuelle Härtung an einem genau definierten Ort vorgenommen werden kann. Bei diesem Typ von UV-Strahlern wird die Strahlungsintensität in W/cm2 angegeben und liegt bei den bevorzugten Geräten zwischen 2 W/cm2 und 17 W/cm2. Geräte die bei der vorliegenden Erfindung zum Einsatz kommen können, sind zum Beispiel UV-Flächenstrahler des Typs UVAPRINT mit H- oder F-Strahler und UV-Punktstrahler des Typs BLUEPOINT der Firma Dr. Honle AG, UV-Technologie, Gräfelfing, Deutschland. Als dritte Möglichkeit können UV-LEDs eingesetzt werden. Diese können sowohl in den beschriebenen Vorhärteeinheiten wie auch den Nachhärteeinheiten in gleicher Weise wie Blaulicht-LED's eingesetzt werden. Es können aber auch Flächenstrahler mit UV-LEDs zur Härtung eingesetzt werden.

Der Aufbau der Vor- und Nachhärteeinheit mit UV-Härtung kann aufgrund der verwendeten Druckgeschwindigkeit und Druckzusammensetzung variieren. Möglich ist auch ein Aufbau ohne Vorhärtung, bei dem ausschliesslich ein UV-Flächenstrahler an der Position der Nachhärtungseinheit eingesetzt wird. Eine andere Möglichkeit ist der Einsatz eines UV-Punktstrahlers auf der Position der Vorhärtungseinheit, wobei auf eine Nachhärtungseinheit verzichtet werden kann. Im Weiteren sind Kombinationen von Blaulicht- und UV-Härtungseinheiten möglich. So können Blaulicht-LEDs oder ein UV-Punktstrahler zur Vorhärtung und ein UV-Flächenstrahler zur Nachhärtung kombiniert werden. Falls Blaulicht und UV-Licht kombiniert werden, sollte jeweils die blaulichthärtbare Druckzusammensetzung verwendet werden. Im Falle einer Kombination von UV-Punkt- und UV-Flächenstrahler ist die Druckzusammensetzung für den Einsatz mit UV-Punktstrahlern einzusetzen.

Die Eigenschaften der im Folgenden dargestellten Beispiele für UV-härtbare Druckzusammensetzungen weichen bezüglich Viskosität und Oberflächenspannung nur unwesentlich von den entsprechenden blaulichthärtenden Zusammensetzungen des gleichen Monomer- /Oligomer-Typs ab.

Bei den Beispielen werden aufgrund der unterschiedlichen Emissionsspektren von UV-Punktund UV-Flächenstrahlern zur Polymerisation unterschiedliche Initiatoren verwendet.

| | Initiator zur Polymerisation von: | |
|---|---|---|
| | Epoxid- und/oder Oxetan-Monomer | Acrylat-Monomer |
| Flächenstrahler | Irgacure 250 oder UVI-6992 | 2-Hydroxy-2-methylpropiophenon |
| Punktstrahler | Irgacure 250 | 4,4'-Bis(dimethylamino)benzophenon |

UVI-6992 bezeichnet einen Photoinitiator, bestehend aus einer Mischung von Triarylsulfoniumhexafluorophosphat Salzen und wird von der Firma Dow Chemical angeboten.

Beim Einsatz von UV-Strahlern kann zur Beschleunigung der Härtung zusätzlich zum Initiator ein Coinitiator zugegeben werden. Ein solcher Coinitiator ist IRGACURE^{®} 127.

Eine weitere Beschleunigung der Härtung ist durch die Zugabe eines Sensibilisators erreichbar, dessen Absorption im Bereich des Emissionsspektrums des UV-Strahlers liegt. Mögliche Sensibilisatoren sind Thioxanthenderivate wie 1-Chloro-4-propoxy-9H-thioxanthe-9-on (CPTX) oder Isopropyl-9H-thioxanthen-9-on; Carbazolderivate wie N-Vinylcarbazol, N-Ethylcarbazol, N-Phenylcarbazol oder 1,3-di(carbazol-9-yl)propanol-2, welche in einem Anteil von 0 bis 4 % zur Mischung beigegeben werden.

Eine weitere Beschleunigung der Härtung ist auch durch die Zugabe eines Benzylalkohols erreichbar. Mögliche Benzylalkohole sind 3,4-Dimethoxybenzylalkohol oder Piperonylalkohol. Mit diesen Benzylalkoholen kann das Oxetan TMPO in Beispiel 4 teilweise oder vollständig ersetzt werden.

### Beispiel 4: UV härtbare Druckzusammensetzung enthaltend ein Epoxid-Monomer und ein Oxetan Monomer

| Komponente | Gew.% | | |
|---|---|---|---|
| | optimal | min | max |
| Araldit^{®} CY 179 | 78.9 | 60 | 95 |
| Oxetan TM PO | 13.9 | 0 | 35 |
| IRGACURE^{®} 250 | 3 | 0.5 | 5 |
| IRGACURE^{®} 127 | 1.2 | 0 | 3 |
| Sensibilisator CPTX | 0.02 | 0 | 4 |
| Aerosil^{®} R7200 | 3 | 0 | 10 |

IRGACURE^{®} 127 bezeichnet einen kationischen Coinitiator bestehend aus 2-Hydroxy-1-(4-[4-(2-hydroxy-2-methyl-propionyl)-benzyl]-phenyl}-2-methyl-propan-1-on, der von der Firma Ciba Specialty Chemicals angeboten wird.

### Beispiel 4a: Eingefärbte UV härtbare Druckzusammensetzung enthaltend ein Epoxid-Monomer und ein Oxetan-Monomer

| Komponente | Gew.-% |
|---|---|
| Araldit^{®} CY 179 | 69.41 |
| Oxetan TMPO | 23.11 |
| Initiator | 4.62 |
| Sandoplast^{®} Blue 2B | 0.09 |
| AEROSIL^{®} R7200 | 2.77 |

### Beispiel 4b: UV härtbare Druckzusammensetzung enthaltend einen Benzylalkohol

| Komponente | Gew.-% |
|---|---|
| Araldit^{®} CY 179 | 70.55 |
| Oxeta n TM PO | 12.45 |
| IRGACURE^{®} 250 | 3 |
| IRGACURE^{®} 127 | 1 |
| 3,4-Dimethoxy-benzylalkohol | 10 |
| Aerosil^{®} R7200 | 3 |

### Beispiel 4c: UV härtbare Druckzusammensetzung enthaltend Oxetan-Monomere

| Komponente | Gew.-% |
|---|---|
| OXT-121 | 92.52 |
| Initiator | 4.62 |
| Sandoplast^{®} Blue 2B | 0.09 |
| AEROSIL^{®} R7200 | 2.77 |

Das erfindungsgemässe Verfahren und die neuen Druckzusammensetzungen erlauben es Warenverpackungen, zum Beispiel Medikamentenverpackungen, mit transparenten Blindenschriftpunkten zu bedrucken. Dadurch kann die zusätzliche taktil erfassbare Information auf eine Verpackung aufgebracht werden, ohne dass die visuelle Erkennbarkeit der darunter befindlichen Informationen beeinträchtigt ist. Oft ist es jedoch vorteilhaft mit einer eingefärbten Druckzusammensetzung zu arbeiten, um Personen mit einer gewissen Restsehfähigkeit das visuelle Erkennen der aufgedruckten Blindenschrift-Punkte zu ermöglichen. Hierzu werden vorteilhafterweise blaue Zusammensetzungen gewählt, da diese gut sichtbar sind und im Gegensatz zu schwarzen Zusammensetzungen eine geringe Absorption bei Wellenlängen um 470 nm aufweisen.

Ein weiterer Vorteil der vorliegenden Erfindung liegt darin, dass beidseitig bedruckt werden kann. Bei Druckanwendungen für den Heimbereich verringert dies den Papierverbrauch erheblich und das Volumen von Zeitschriften, Büchern oder anderen Druckerzeugnissen lässt sich dadurch nochmals erheblich reduzieren.

Wird nach dem Aufbringen und Härten der Brailleschrift eine Qualitätskontrolle der aufgebrachten Brailleschrift verlangt, kann der in den Beispielen erwähnten Zusammensetzungen ein Fluoreszenzfarbstoff beigegeben werden. Dieser Farbstoff ist am Tageslicht unsichtbar, fluoresziert jedoch bei Bestrahlung mit UV Licht im sichtbaren Spektrum und kann mit einer Kamera zur Auswertung aufgenommen werden. Typische Beispiele von derartigen Fluoreszenzfarbstoffen sind substituierte Benzoxazinone, wie sie z.B. unter dem Namen Cartax^{®} von der Firma Clariant angeboten werden. Die Fluoreszenzfarbstoffe werden vorzugsweise in Konzentrationen bis 10 Gew. % angewandt.

Als Merkmal und Fälschungsschutz können die Druckzusammensetzungen mit einer DNA, einem DNA-Fragment mit bekannter Basensequenz oder mit einem Peptid mit bekannter Aminosäurensequenz versetzt und dadurch eindeutig gekennzeichnet werden.

### Liste der Bezugszahlen

| | | | |
|---|---|---|---|
| 1 | Druckvorrichtung | | |
| 2 | Tropfen | 46 | Papiereinzug |
| 3 | Blindenschriftpunkt | 50 | Vorhärteeinheit |
| 10 | Patrone | 51 | Fassung |
| 11 | Zuführleitung | 52 | Kühlkörper |
| 12 | Gummimembrane | 53 | LED |
| 13 | Pumpe | 54 | Kollimatorlinse |
| 14 | Reinigungsstation | 55 | Linsenhalter |
| 15 | Parkstation | 56 | Kühlrippen |
| 20 | Druckkopf | 57 | Basalplatte |
| 21 | Heizung | 58 | Abschattung |
| 22 | Elektromagnetventil | 59 | Austrittsöffnung |
| 23 | Düse | 60 | Lichtstrahlen |
| 24 | Düsenkanal | 61 | Spalt |
| 30 | zu bedruckende Oberfläche | 70 | Nachhärteeinheit |
| 40 | Druckersteuerung | G | treibendes Gas |
| 41 | PC | T | Druckzusammensetzung |
| 42 | Interface | X | Druckrichtung |
| 43 | Druckkopfvor- und Rücklauf | Y | Papiervorschubrichtung |
| 44 | Papiervorschub | d | Düsenkanaldurchmesser |
| 45 | Heizregler | l | Düsenkanallänge |

## Patentansprüche

1. Braille-Schrift-Druckvorrichtung (1) zur Herstellung von Braille-Schrift und dreidimensionalen Strukturen auf bedruckbaren Oberflächen umfassend einen Druckkopf (20) und eine Steuerung, und Mittel zur relativen Bewegung von Druckkopf (20) und zu bedruckender Oberfläche (30) zueinander, **dadurch gekennzeichnet, dass** dem Druckkopf (20) aus einem Reservoir (10) gas- und lichtgeschützt eine UV- oder Blaulicht-härtbare Druckzusammensetzung T zuführbar ist und der Druckkopf (20) mindestens ein Ventil (22) und eine nachgeschaltete Düse (23) zur Erzeugung und Abgabe von einzelnen Tropfen (2) der Druckzusammensetzung in Richtung auf die zu bedruckende Oberfläche (30) umfasst, **dadurch gekennzeichnet, dass** funktional in Druckrichtung (x) nach der Düse (23) mindestens eine Vorhärteeinheit (50) und eine Nachhärtungseinheit (70) vorgesehen ist und die Vorhärteeinheit (50) am Druckkopf angeordnet ist und eine UV- oder Blaulicht-Quelle umfasst.

2. Braille-Schrift-Druckvorrichtung (1) nach Anspruch 1, **dadurch gekennzeichnet, dass** Ventil (22) und Düse (23) so dimensioniert sind, dass die erzeugten Tropfen ein Volumen von minimal 0.005 mm³, maximal 0.5 mm³ und bevorzugt 0.1 bis 0.2 mm³ besitzen.

3. Braille-Schrift-Druckvorrichtung (1) nach Anspruch 1, **dadurch gekennzeichnet, dass** mindestens eine weitere Vorhärteeinheit (50') am Druckkopf (20) angeordnet ist, so dass bei wechselnder Druckrichtung (x) immer eine Vorhärteeinheit (50, 50') in Druckrichtung nach der Düse angeordnet ist.

4. Braille-Schrift-Druckvorrichtung (1) nach einem der Ansprüche 1 bis 3, **dadurch gekennzeichnet, dass** die Blaulichtquelle eine Hochleistungs-LED umfasst.

5. Braille-Schrift-Druckvorrichtung nach einem der Ansprüche 1 bis 3, **dadurch gekennzeichnet, dass** die UV-Quelle einen UV-Punktstrahler oder einen UV-Flächenstrahler umfasst.

6. Braille-Schrift-Druckvorrichtung (1) nach einem der Ansprüche 1 bis 5, **dadurch gekennzeichnet, dass** zumindest die Düse des Druckkopfes (20) in einer Parkstation (15) lichtgeschützt parkierbar ist.

7. Braille-Schrift-Druckvorrichtung (1) nach einem der Ansprüche 1 bis 6, **dadurch gekennzeichnet, dass** die blaulichthärtbare Druckzusammensetzung (T) in einer mittels komprimiertem Gas oder Flüssiggas mit einstellbarem Partialdruck druckbeaufschlagbaren Patrone (10) gelagert ist und über eine Leitung (11) mit dem Druckkopf (20) in kommunizierender Verbindung steht.

8. Braille-Schrift-Druckvorrichtung (1) nach einem der Ansprüche 1 bis 7, **dadurch gekennzeichnet, dass** der Druckkopf (20) Heizmittel (21) umfasst, die die Druckzusammensetzung (T) direkt und/oder Ventil (22) und/oder Düse (23) erwärmen.

9. Braille-Schrift-Druckvorrichtung (1) nach einem der Ansprüche 1 bis 8, **dadurch gekennzeichnet, dass** die Nachhärtungseinheit (70) in Vorschubrichtung y stromabwärts vom Druckkopf (20) angeordnet ist und mindestens eine weitere UV- oder Blaulicht-Quelle umfasst.

10. Braille-Schrift-Druckvorrichtung (1) nach einem der Ansprüche 1 bis 9, **dadurch gekennzeichnet, dass** der Druckkopf (20) mindestens ein gesteuertes Sitzventil, vorzugsweise ein Elektromagnetventil (22) umfasst, das durch zeitlich definierte Öffnungsimpulse die benötigten Mengen Druckzusammensetzung (T) für die einzelnen Schriftpunkte (3) dosiert und einer nachgeschalteten Düse (23) zugeführt, wobei die Düse (23) einen Druckzusammensetzungstropfen (2) formt und für die präzise Abgabe und Positionierung dieses Tropfens (2) auf dem zu bedruckenden Objekt (30) sorgt, so dass jeweils ein Blindenschriftpunkt (3) auf dem zu bedruckenden Objekt (30) von einem einzigen Tropfen (2) gebildet ist.

11. l Braille-Schrift-Druckvorrichtung (1) nach einem der Ansprüche 1 bis 10, **dadurch gekennzeichnet, dass** die Düse (23) einen Düsenkanals (24) mit einem Durchmesser (d) von minimal 0.1 mm, maximal 0.5 mm und bevorzugt 0.3 bis 0.45 mm aufweist.

12. Braille-Schrift-Druckvorrichtung (1) nach Anspruch 11, **dadurch gekennzeichnet, dass** eine Länge (l) des Düsenkanals (24) minimal 2 x d, maximal 10 x d, bevorzugt 2 bis 3 x d beträgt.

13. Druckzusammensetzung (T) zur Verwendung in einer Braille-Schrift-Druckvorrichtung gemäss einem der vorgenannten Ansprüche, **dadurch gekennzeichnet, dass** sie blaulicht- oder UV-härtbare Mono- und/oder Oligomere umfasst, die aus der folgenden Gruppe ausgewählt sind: Acrylate, vorzugsweise Mono-, Di- oder Triacrylate, Epoxide, ungesättigte Polyester, Oxetane oder Vinylether oder Gemische davon, und wobei die Zusammensetzung bei einer Verarbeitungstemperatur von 40 bis 70°C eine Viskosität von etwa 50 bis 100 mPa*s aufweist.

14. Druckzusammensetzung nach Anspruch 13, **dadurch gekennzeichnet, dass** sie bei 25°C eine Oberflächenspannung von etwa 40 mN/m aufweist.

15. Druckzusammensetzung nach Anspruch 13 oder 14, **dadurch gekennzeichnet, dass** sie ein alpha-Diketon mit charakteristischer Absorption, vorzugsweise (+/-)-Campherchinon, als Sensibilisator umfasst.

16. Druckzusammensetzung nach einem der Ansprüche 13 bis 15, **dadurch gekennzeichnet, dass** die Mono- und/oder Oligomere zu annähernd 100 % vernetzend sind.

17. Druckzusammensetzung nach einem der Ansprüche 13 bis 16, **dadurch gekennzeichnet, dass** sie mindestens folgende Komponenten umfasst:
- Epoxid- oder Oxetan- Monomere und/oder -Oligomere, vorzugsweise Araldit® CY 179 oder OXT-121,
- einen Photoinitiator, vorzugsweise ein substituiertes Diphenyliodionium-Salz und besonders bevorzugt IRGACURE® 250
- einen Sensibilisator, vorzugsweise ein alpha-Diketon mit charakteristischer Absorption, besonders bevorzugt (+/-)-Campherchinon.

18. Druckzusammensetzung nach einem der Ansprüche 13 bis 16, **dadurch gekennzeichnet, dass** sie mindestens folgende Komponenten umfasst:
- Acrylat-Monomere und/oder -Oligomere, vorzugsweise EBECRYL® 150
- einen Sensibilisator, vorzugsweise ein alpha-Diketon mit charakteristischer Absorption, besonders bevorzugt (+/-)-Campherchinon.

19. Druckzusammensetzung nach einem der Ansprüche 17 oder 18, **dadurch gekennzeichnet, dass** sie eine strukturmodifizierte pyrogene Kieselsäure, vorzugsweise AEROSIL® R7200 zur Verbesserung der physikalischen Eigenschaften umfasst.

20. Druckzusammensetzung nach einem der Ansprüche 17 bis 19, **dadurch gekennzeichnet, dass** die Zusammensetzung einen Beschleuniger, vorzugsweise ein tertiäres Amin mit H in α-Stellung, besonders bevorzugt Ethyl 4-(Dimethylamino)Benzoat umfasst.

21. l Druckzusammensetzung nach einem der vorhergehenden Ansprüche, **dadurch gekennzeichnet, dass** sie folgende Komponenten für den Fälschungsschutz umfasst:
- Fluoreszenzfarbstoffe und/oder
- DNA, DNA-Fragmente oder Peptide bekannter Sequenz.

22. Verfahren zur Herstellung von Braille-Schrift und dreidimensionalen Strukturen mit einem Druckvorrichtung (1) gemäss einem der Ansprüche 1 bis 12 unter Verwendung von Druckzusammensetzungen gemäss der Ansprüche 13 bis 21, **dadurch gekennzeichnet, dass** jeder Blindenschrift-Punkt (3) mit einem einzigen Tropfen der Druckzusammensetzung (T) erstellt wird.

23. Verfahren nach Anspruch 22, **dadurch gekennzeichnet, dass** die Druckzusammensetzung vor dem und/oder im Ventil auf eine Betriebstemperatur von 30 bis 70°C, vorzugsweise auf etwa 45°C, erwärmt und auf dieser Temperatur gehalten wird, wobei eine Grenzviskosität von 50 bis 100 mPa*s zur Tropfenbildung eingehalten wird.

24. Verfahren nach Anspruch 22 oder 23, **dadurch gekennzeichnet, dass** mit einem Betriebsdruck von 1 bis 8 bar, vorzugsweise von 1 bar, gedruckt wird, wobei in Abhängigkeit von der Betriebstemperatur und der Viskosität der Zusammensetzung eine Grenzviskosität von 50 bis 100 mPa*s zur Tropfenbildung eingehalten wird.

## Claims

1. Braille script printing device (1) for producing braille script and three-dimensional structures on printable surfaces, comprising a printhead (20) and a controller, and means for the relative movement of printhead (20) and surface (30) to be printed in relation to one another, **characterized in that** a printing composition T, which is curable by UV light or blue light, can be fed to the printhead (20) from a reservoir (10) in a manner protected from gas and light, and the printhead (20) comprises at least one valve (22) and a nozzle (23) connected downstream for producing and delivering individual drops (2) of Printing composition in the direction towards the surface (30) to be printed, **characterized in that** at least one pre-curing unit (50) and one post-curing unit (70) are provided functionally in the printing direction (x) after the nozzle (23), and the pre-curing unit (50) is arranged on the printhead and comprises a UV light source or blue light source.

2. Braille script printing device (1) according to Claim 1, **characterized in that** the valve (22) and the nozzle (23) are dimensioned such that the produced drops have a volume of at least
0.005 mm³, at most 0.5 mm³, and preferably
0.1 to 0.2 mm³.

3. Braille script printing device (1) according to Claim 1, **characterized in that** at least one further pre-curing unit (50') is arranged on the printhead (20) such that a pre-curing unit (50, 50') is always arranged after the nozzle in the printing direction in the event of changing printing direction (x).

4. Braille script printing device (1) according to any one of Claims 1 to 3, **characterized in that** the blue light source comprises a high-performance LED.

5. Braille script printing device according to any one of Claims 1 to 3, **characterized in that** the UV source comprises a UV spot radiator or a UV panel radiator.

6. Braille script printing device (1) according to any one of Claims 1 to 5, **characterized in that** at least the nozzle of the printhead (20) can be parked in a light-protected manner in a parking station (15).

7. Braille script printing device (1) according to any one of Claims 1 to 6, **characterized in that** Printing composition (T), which can be cured by blue light, is stored in a cartridge (10), to which pressure can be applied by means of compressed gas or liquid gas having adjustable partial pressure, and which has a communicating connection via a line (11) with the printhead (20).

8. Braille script printing device (1) according to any one of Claims 1 to 7, **characterized in that** the printhead (20) comprises heating means (21), which heat Printing composition (T) directly and/or the valve (22) and/or the nozzle (23).

9. Braille script printing device (1) according to any one of Claims 1 to 8, **characterized in that** the post-curing unit (70) is arranged downstream from the printhead (20) in the advance direction y and comprises at least one further UV light source or blue light source.

10. Braille script printing device (1) according to any one of Claims 1 to 9, **characterized in that** the printhead (20) comprises at least one controlled poppet valve, preferably a solenoid valve (22), which meters the required quantities of printing composition (T) for the individual script dots (3) by chronologically defined opening pulses and feeds these quantities to a nozzle (23) connected downstream, wherein the nozzle (23) shapes a printing composition drop (2) and ensures the precise delivery and positioning of this drop (2) on the object (30) to be printed, such that in each case a braille dot (3) is formed by a single drop (2) on the object (30) to be printed.

11. Braille script printing device (1) according to any one of Claims 1 to 10, **characterized in that** the nozzle (23) has a nozzle channel (24) having a diameter (d) of at least 0.1 mm, at most 0.5 mm, and preferably 0.3 to 0.45 mm.

12. Braille script printing device (1) according to Claim 11, **characterized in that** a length (l) of the nozzle channel (24) is at least 2 x d, at most 10 x d, preferably 2 to 3 x d.

13. Printing composition (T) for use in a braille script printing device according to any one of the preceding claims, **characterized in that** it comprises monomers and/or oligomers which can be cured by blue light or UV light, and which are selected from the following group: acrylates, preferably monoacrylates, diacrylates, or triacrylates, epoxides, unsaturated polyesters, oxetanes, or vinyl ethers or mixtures thereof, and wherein the composition has a viscosity of approximately 50 to 100 mPa*s at a processing temperature of 40 to 70°C.

14. Printing composition according to Claim 13, **characterized in that** it has a surface tension of approximately 40 mN/m at 25°C.

15. Printing composition according to Claim 13 or 14, **characterized in that** it comprises an alpha diketone having characteristic absorption, preferably (+/-) camphor quinone, as a sensitizer.

16. Printing composition according to any one of Claims 13 to 15, **characterized in that** the monomers and/or oligomers are cross-linked to approximately 100%.

17. Printing composition according to any one of Claims 13 to 16, **characterized in that** it comprises at least the following components:
- epoxide or oxetane monomers and/or oligomers, preferably Araldit^{®} CY 179 or OXT-121,
- a photoinitiator, preferably a substituted diphenyl iodonium salt and particularly preferably IRGACURE® 250,
- a sensitizer, preferably an alpha diketone having characteristic absorption, particularly preferably (+/-) camphor quinone.

18. Printing composition according to any one of Claims 13 to 16, **characterized in that** it comprises at least the following components:
- acrylate monomers and/or oligomers, preferably EBECRYL® 150
- a sensitizer, preferably an alpha diketone having characteristic absorption, particularly preferably (+/-) camphor quinone.

19. Printing composition according to any one of Claims 17 or 18, **characterized in that** it comprises a structure-modified pyrogenic silicic acid, preferably AEROSIL® R7200 for improving the physical properties.

20. Printing composition according to any one of Claims 17 to 19, **characterized in that** the composition comprises an accelerator, preferably a tertiary amine having H in the α position, particularly preferably ethyl 4-(dimethylamino) benzoate.

21. Printing composition as claimed in any one of the preceding claims, **characterized in that** it comprises the following components for forgery protection:
- fluorescent pigments and/or
- DNA, DNA fragments, or peptides of known sequence.

22. Method for producing braille script and three-dimensional structures using a printing device (1) according to any one of Claims 1 to 12 while employing printing compositions according to any one of Claims 13 to 21, **characterized in that** each braille dot (3) is prepared using a single drop of the printing composition (T).

23. Method according to Claim 22, **characterized in that** the printing composition is heated before and/or in the valve to an operating temperature of 30 to 70°C, preferably to approximately 45°C and is held at this temperature, wherein a limit viscosity of 50 to 100 mPa*s is maintained for the drop formation.

24. Method according to Claim 22 or 23, **characterized in that** pressurization is performed at an operating pressure of 1 to 8 bar, preferably 1 bar, wherein a limit viscosity of 50 to 100 mPa*s is maintained for the drop formation, depending on the operating temperature and the viscosity of the composition.

## Revendications

1. Dispositif d'impression braille (1) pour la production d'écriture braille et de structures tridimensionnelles sur des surfaces imprimables, comprenant une tête d'impression (20) et un dispositif de commande, et des moyens destinés à produire un mouvement relatif l'une par rapport à l'autre de la tête d'impression (20) et de la surface à imprimer (30), **caractérisé en ce qu'**une composition d'impression T durcissable aux UV et à la lumière bleue peut être acheminée vers la tête d'impression (20) à partir d'un réservoir (10) de manière protégée contre les gaz et la lumière et **en ce que** la tête d'impression (20) comprend au moins une vanne (22) et une buse aval (23) destinées à générer et délivrer des gouttes individuelles (2) de la composition d'impression dans la direction de la surface à imprimer (30), **caractérisé en ce qu'**il est prévu fonctionnellement, dans la direction d'impression (x) en aval de la buse (23), au moins une unité de pré-durcissement (50) et une unité de post-durcissement (70) et **en ce que** l'unité de pré-durcissement (50) est disposée sur la tête d'impression et comprend une source UV ou de lumière bleue.

2. Dispositif d'impression braille (1) selon la revendication 1, **caractérisé en ce que** la vanne (22) et la buse (23) sont dimensionnées telle sorte que les gouttes aient un volume d'au moins 0,005 mm³, d'au plus 0,5 mm³, et de préférence de 0,1 à 0,2 mm³.

3. Dispositif d'impression braille (1) selon la revendication 1, **caractérisé en ce qu'**au moins une unité de pré-durcissement supplémentaire (50') est disposée sur la tête d'impression (20) de telle sorte que lors d'un changement de direction d'impression (x), une unité de pré-durcissement (50, 50') soit toujours disposée en aval de la buse dans la direction d'impression.

4. Dispositif d'impression braille (1) selon l'une quelconque des revendications 1 à 3, **caractérisé en ce que** la source de lumière bleue comprend une LED de forte puissance.

5. Dispositif d'impression braille (1) selon l'une quelconque des revendications 1 à 3, **caractérisé en ce que** la source UV comprend un projecteur UV ponctuel ou un projecteur UV plan.

6. Dispositif d'impression braille (1) selon l'une quelconque des revendications 1 à 5, **caractérisé en ce qu'**au moins la buse de la tête d'impression (20) peut être parquée à l'état protégé de la lumière dans un poste de parcage (15).

7. Dispositif d'impression braille (1) selon l'une quelconque des revendications 1 à 6, **caractérisé en ce que** la composition d'impression durcissable à la lumière bleue (T) est stockée dans une cartouche (10) pouvant être mise sous pression avec une pression partielle réglable au moyen d'un gaz comprimé ou d'un gaz liquéfié et reliée par l'intermédiaire d'une canalisation (11) à la tête d'impression (20).

8. Dispositif d'impression braille (1) selon l'une quelconque des revendications 1 à 7, **caractérisé en ce que** la tête d'impression (20) comprend des moyens de chauffage (21) qui chauffent directement la composition d'impression (T) et/ou la vanne (22) et/ou la buse (23).

9. Dispositif d'impression braille (1) selon l'une quelconque des revendications 1 à 8, **caractérisé en ce que** l'unité de post-durcissement (70) est disposée dans la direction d'avance y en aval de la tête d'impression (20) et comprend au moins une autre source UV ou de lumière bleue.

10. Dispositif d'impression braille (1) selon l'une quelconque des revendications 1 à 9, **caractérisé en ce que** la tête d'impression (20) comprend au moins une vanne à siège commandée, de préférence une électrovanne (22) qui dose, par des impulsions d'ouverture définies dans le temps, les quantités de composition d'impression (T) requises pour chacun des points d'écriture (3) et qui les achemine à une buse aval (23), la buse (23) formant une goutte de composition d'impression (2) et assurant la délivrance et le positionnement précis de cette goutte (2) sur l'objet à imprimer (30) de manière à ce qu'un point braille (3) respectif soit formé sur l'objet à imprimer (30) au moyen d'une seule goutte (2).

11. Dispositif d'impression braille (1) selon l'une quelconque des revendications 1 à 10, **caractérisé en ce que** la buse (23) comporte un canal de buse (24) ayant un diamètre (d) d'au moins 0,1 mm, d'au plus 0,5 mm, et de préférence de 0,3 à 0,45 mm.

12. Dispositif d'impression braille (1) selon la revendication 11, **caractérisé en ce qu'**une longueur (l) du canal de buse (24) est d'au moins 2 x d, d'au plus 10 x d, et de préférence de 2 à 3 x d.

13. Composition d'impression (T) destinée à être utilisée dans un dispositif d'impression braille selon l'une quelconque des revendications précédentes, **caractérisée en ce qu'**elle comprend des monomères et/ou des oligomères durcissables à la lumière bleue ou aux UV, qui sont choisis dans le groupe comprenant: des acrylates, de préférence, des mono-, di- ou triacrylates, des époxydes, des polyesters insaturés, des oxétanes ou des éthers vinyliques ou des mélanges de ceux-ci, et dans lequel la composition présente une viscosité d'environ 50 à 100 mPa*s à une température de traitement d'au moins 40 à 70°C.

14. Composition d'impression selon la revendication 13, **caractérisée en ce qu'**elle présente à 25°C une tension superficielle d'environ 40 mN/m.

15. Composition d'impression selon la revendication 13 ou 14, **caractérisée en ce qu'**elle comprend en tant que sensibilisant une alpha-dicétone ayant une absorption caractéristique, de préférence de la (+/-)-camphoquinone.

16. Composition d'impression selon l'une quelconque des revendications 13 à 15, **caractérisée en ce que** les monomères et/ou oligomères sont réticulés à environ 100%.

17. Composition d'impression selon l'une quelconque des revendications 13 à 16, **caractérisée en ce qu'**elle comprend au moins les composants suivants :
- des monomères et/ou des oligomères d'époxyde ou d'oxétane, de préférence de l'Araldite® CY 179 ou de l'OXT-121,
- un photo-initiateur, de préférence un sel de diphényliodionium substitué, et de manière particulièrement préférée de l'IRGACURE® 250,
- un sensibilisant, de préférence une alpha-dicétone ayant une absorption caractéristique, et de manière particulièrement préférée de la (+/-)-camphoquinone.

18. Composition d'impression selon l'une quelconque des revendications 13 à 16, **caractérisée en ce qu'**elle comprend au moins les composants suivants :
- des monomères et/ou des oligomères d'acrylate, de préférence de l'EBECRYL® 150,
- un sensibilisant, de préférence une alpha-dicétone ayant une absorption caractéristique, et de manière particulièrement préférée de la (+/-)-camphoquinone.

19. Composition d'impression selon l'une quelconque des revendications 17 ou 18, **caractérisée en ce qu'**elle comprend une silice pyrogénée à structure modifiée, de préférence de l'AEROSIL® R7200 pour améliorer les propriétés physiques.

20. Composition d'impression selon l'une quelconque des revendications 17 à 19, **caractérisée en ce que** la composition comprend un accélérateur, de préférence une amine tertiaire avec H en position α, et de manière particulièrement préférée du 4-(diméthylamino)benzoate d'éthyle.

21. Composition d'impression selon l'une quelconque des revendications précédentes, **caractérisée en ce qu'**elle comprend les constituants suivants pour la protection contre la contrefaçon :
- des colorants fluorescents et/ou
- une séquence connue d'ADN, de fragments d'ADN ou de peptide.

22. Procédé de fabrication de structures d'écriture braille et tridimensionnelles au moyen d'un dispositif d'impression (1) selon l'une quelconque des revendications 1 à 12 en utilisant des compositions d'impression selon l'une quelconque des revendications 13 à 21, **caractérisé en ce que** chaque point braille (3) est créé au moyen d'une seule goutte de composition d'impression (T).

23. Procédé selon la revendication 22, **caractérisé en ce que** la composition d'impression avant et/ou dans la vanne est chauffée à une température de fonctionnement de 30 à 70°C, et de préférence à environ 45°C, et est maintenue à cette température, une viscosité intrinsèque de 50 à 100 mPa*s étant respectée pour la formation de gouttes.

24. Procédé selon la revendication 22 ou 23, **caractérisé en ce que** l'impression est effectuée avec une pression de fonctionnement de 1 à 8 bar, de préférence de 1 bar, dans lequel une viscosité intrinsèque d'au moins 50 à 100 mPa*s est respectée en fonction de la température de fonctionnement et de la viscosité de la composition pour la formation de gouttes.
